# EUROPEAN PATENT APPLICATION

(11) **EP 4 637 201 A1**
(43) Date of publication of application: **22.10.2025**
(21) Application number: 23909824.7
(22) Date of filing: 23.11.2023
(51) Int. Cl.: H04W 24/02, H04L 45/28

(54) **COMMUNICATION METHOD AND APPARATUS**

(30) Priority: 30.12.2022 CN 202211729159
(71) Applicant: Huawei Technologies Co., Ltd., Shenzhen, Guangdong 518129 (CN)
(72) Inventor: ZHU, Huiying, Shenzhen, Guangdong 518129 (CN); DONG, Pengpeng, Shenzhen, Guangdong 518129 (CN); TANG, Zhenfei, Shenzhen, Guangdong 518129 (CN); ZHU, Yuanping, Shenzhen, Guangdong 518129 (CN); WU, Fangzhou, Shenzhen, Guangdong 518129 (CN)
(74) Representative: Thun, Clemens
(86) International application number: PCT/CN2023/133692
(87) International publication number: WO 2024/139892

(57) **Abstract**

This application provides a communication method and apparatus, and relates to the field of communication technologies. The method includes: receiving a backhaul adaptation protocol data protocol data unit BAP data PDU and backhaul BH routing configuration information, where a BAP data PDU header includes a first destination address field and a first path field, the BH routing configuration information includes at least one entry, each of the at least one entry includes a BAP address, a next-hop BAP address, and a BAP path identifier, and the BAP address of each of the at least one entry matches the first destination address field; selecting a first entry from the at least one entry, and selecting a link corresponding to a next-hop BAP address in the first entry as an egress link; and rewriting the BAP data PDU header, and sending the BAP data PDU to the egress link. In this way, a first IAB does not need to wait for a donor-CU to perform path switching, so that a rapid channel change is better adapted, a packet loss is reduced or node congestion is alleviated, and robustness of service transmission is improved.

## Description

### TECHNICAL FIELD

Embodiments of this application relate to the field of communication technologies, and in particular, to a communication method and apparatus.

### BACKGROUND

An integrated access and backhaul (integrated access and backhaul, IAB) network includes a terminal device, an IAB node, and a donor node. The IAB node may provide a wireless access service for the terminal device, and is connected to the donor node (donor node) via a wireless backhaul link, to transmit service data of a user. Because the IAB node is introduced in the IAB network, more terminal devices can communicate with the donor node, to improve a network capacity.

The donor node may be a donor base station, and the donor node may be referred to as an IAB donor (IAB donor) or a DgNB (that is, a donor gNodeB) for short. The donor node may be a complete entity, or may be in a form in which a central unit (Central Unit, CU for short) (referred to as a donor-CU or a CU for short) and a distributed unit (Distributed Unit, DU for short) (referred to as a donor-DU for short) are split. In other words, the donor node includes the donor-CU and the donor-DU. Because the donor-CU performs centralized routing management on BAP packets, an intermediate node performs path switching only when a radio link failure (radio link failure, RLF) occurs. This causes a packet loss or node congestion due to a long latency, resulting in a failure in adapting to a rapid change in link quality caused by node mobility.

### SUMMARY

Embodiments of this application provide a communication method and apparatus, to improve communication reliability of an IAB network.

According to a first aspect, an embodiment of this application provides a communication method. The method may be performed by a first IAB node, or may be performed by a module (for example, a chip) having a function of the first IAB node. For ease of description, the following uses an example in which the first IAB node performs the method for description. The method includes: receiving a backhaul adaptation protocol BAP data protocol data unit data PDU and backhaul BH routing configuration information, where a BAP data PDU header includes a destination address field and a path field, the BH routing configuration information includes at least one entry, each of the at least one entry includes a respective BAP address, a respective next-hop BAP address, and a respective BAP path identifier, and the BAP address of each of the at least one entry matches the destination address field; selecting a first entry from the at least one entry, and selecting a link corresponding to a next-hop BAP address in the first entry as an egress link; and rewriting the BAP data PDU header, and sending the BAP data PDU to the egress link. According to the method, the first IAB does not need to wait for a donor node to perform path switching, so that a rapid channel change is better adapted, a packet loss is reduced or node congestion is alleviated, and robustness of service transmission is improved.

Optionally, BAP addresses in different entries in the BH routing configuration information may be the same, and next-hop BAP addresses and BAP path identifiers in different entries may be different. It may be understood that, the first IAB node in this application may alternatively be referred to as a cluster header (cluster header) node or a function node, that is, a node that has a function of selecting a transmission path of a BAP packet based on channel quality and modifying a BAP PDU header. A name of the node that has the function is not specifically limited in this application.

Optionally, a destination address field in the BAP data PDU header is a destination BAP address (BAP address), and a path field in the BAP data PDU header is a BAP path ID (BAP path ID). It may be understood that, the destination BAP address and the BAP path ID are collectively referred to as a BAP routing identifier (BAP routing ID). The BAP routing ID reflects an identifier of a destination node and a path used by the first IAB node to reach the destination node. According to the implementation, the first IAB node may select a more proper next-hop node and a more proper BAP path from the BH routing configuration information, to improve communication reliability of an IAB system.

In a possible implementation of the first aspect, selecting the first entry from the at least one entry includes: determining the first entry based on quality of a channel between the first IAB node and a next-hop node corresponding to a next-hop BAP address in the at least one entry. According to the implementation, the first IAB node may select a more proper next-hop node and a more proper BAP path based on quality of channels between the first IAB node and a plurality of next-hop nodes, so that a rapid channel change is better adapted, a packet loss is reduced or node congestion is alleviated, and robustness of service transmission is improved.

Determining the first entry based on the quality of the channel between the first IAB node and the next-hop node corresponding to the next-hop BAP address in the at least one entry includes:
determining an entry corresponding to a first next-hop BAP address as the first entry, where the quality of the channel between the first IAB node and a next-hop node corresponding to the first next-hop BAP address meets a first preset condition;
determining an entry corresponding to a first next-hop BAP address as the first entry, where a value of a path selection function between the first IAB node and a next-hop node corresponding to the first next-hop BAP address meets a second preset condition, where the value of the path selection function is determined based on the quality of the channel between the first IAB node and the next-hop node corresponding to the first next-hop BAP address, a path priority or a cost metric, and the path selection function; or
determining an entry corresponding to a first next-hop BAP address as the first entry, where a value of a path selection function between the first IAB node and a next-hop node corresponding to the first next-hop BAP address meets a third preset condition, where the value of the path selection function is determined based on the quality of the channel between the first IAB node and the next-hop node corresponding to the first next-hop BAP address, the number of hops from the next-hop node corresponding to the first next-hop BAP address to a destination node or a position of the next-hop node corresponding to the first next-hop BAP address, and the path selection function.

Optionally, the quality of the channel between the first IAB node and the next-hop node corresponding to the next-hop BAP address in the at least one entry is obtained through measurement on a physical layer of the first IAB node, and the quality of the channel between the first IAB node and the next-hop node corresponding to the next-hop BAP address in the at least one entry includes one or more of the following parameters: a signal-to-noise ratio SNR, a signal to interference plus noise ratio SINR, a channel quality indicator CQI, a received signal strength indicator RSSI, or a reference signal received power RSRP. According to the implementation, the first IAB node may select a more proper next-hop node and a more proper BAP path based on different channel parameters between the first IAB node and a plurality of next-hop nodes, so that a rapid channel change is better adapted, a packet loss is reduced or node congestion is alleviated, and robustness of service transmission is improved.

In a possible implementation of the first aspect, rewriting the BAP data PDU header includes rewriting the path field to a BAP path identifier in the first entry. For example, the first IAB node determines the first entry according to the implementation, updates a BAP path ID in the BAP PDU header to a new path ID (that is, the BAP path identifier in the first entry), and sends an updated BAP data PDU to a next-hop node in the first entry. According to the implementation, the first IAB node may update the next-hop node and the BAP path in the BAP PDU header, so that a rapid channel change is better adapted, a packet loss is reduced or node congestion is alleviated, and robustness of service transmission is improved.

In a possible implementation of the first aspect, selecting the first entry from the at least one entry includes: determining, by the first IAB node, that a radio link failure RLF occurs on a link between the first IAB node and a second IAB node, a beam failure BFR occurs on the link between the first IAB node and the second IAB node, and/or quality of a channel between the first IAB node and the second IAB node is lower than a first threshold; and
selecting the first entry from the at least one entry, where the second IAB node is a next-hop node of the first IAB node corresponding to the path field.

It may be understood that, the first threshold in the foregoing condition may be pre-configured, or may be indicated by using signaling. This is not specifically limited in this application. According to the implementation, the first IAB node may re-select a next-hop node and a BAP path when channel quality is poor or when BFR occurs, so that a rapid channel change is better adapted, a packet loss is reduced or node congestion is alleviated, and robustness of service transmission is improved.

In a possible implementation of the first aspect, the method further includes: obtaining first information, where the first information indicates the first IAB node to select the first entry from the at least one entry. According to the implementation, the first IAB node may activate a function of the cluster header node by using the first message, and re-select a next-hop node and a BAP path, so that a rapid channel change is better adapted, a packet loss is reduced or node congestion is alleviated, and robustness of service transmission is improved.

Optionally, the cluster header node meets one or more of the following conditions:
a quantity of neighboring nodes of the cluster header node is greater than a first preset value;
a quantity of parent nodes of the cluster header node is greater than a second preset value and a quantity of child nodes is greater than a third preset value;
the cluster header node configures at least two entries for the address field;
the cluster header node allows receiving and sending via a same BAP entity;
a distributed unit DU of the cluster header node establishes a connection to a parent node;
a mobile terminal MT of the cluster header node establishes a connection to a child node;
the cluster header node deactivates an MT function or activates only a DU function, or the cluster header node establishes a DU-DU interface with a neighboring node; or
the cluster header node deactivates a DU function or activates only an MT function.

It may be understood that, the first preset value, the second preset value, and the third preset value in the foregoing condition may be pre-configured, or may be indicated by using signaling. This is not specifically limited in this application.

Optionally, the first information is carried in a radio resource control RRC message or an F1 application layer protocol AP message.

According to a second aspect, an embodiment of this application provides a communication method. The method may be performed by a donor node, or may be performed by a module (for example, a chip) having a function of the donor node. For ease of description, the following uses an example in which the donor node performs the method for description. The method includes: determining first information, where the first information indicates that a first IAB node is a cluster header node, and the cluster header node is configured to select a first entry from at least one entry; and sending the first information to the first IAB node. According to the method, a first IAB does not need to wait for a donor node to perform path switching, so that a rapid channel change is better adapted, a packet loss is reduced or node congestion is alleviated, and robustness of service transmission is improved.

It may be understood that, in this application, a node that has a function of selecting a transmission path of a BAP packet based on channel quality and modifying a BAP PDU header is collectively referred to as a cluster header (cluster header) node or a function node. A name of the node that has the function is not specifically limited in this application. For example, the first information may indicate that the first IAB node is a cluster header node, and the cluster header node is configured to select the first entry from the at least one entry.

Optionally, the first information is carried in an RRC message or an F1AP message, or may be carried in a new message. This is not specifically limited in this application.

According to a third aspect, an embodiment of this application provides a communication apparatus. The communication apparatus may be the first IAB node in the first aspect, or an electronic device (for example, a chip system) configured in the first IAB node. The communication apparatus includes a corresponding means (means) or module configured to perform the first aspect or any one of the possible implementations. For example, the communication apparatus includes a receiving module (or sometimes referred to as a receiving unit) and a sending module (or sometimes referred to as a sending unit). Optionally, the receiving module and the sending module may be coupled. For example, the receiving module receives a backhaul adaptation protocol BAP data protocol data unit data PDU and backhaul BH routing configuration information, where a BAP data PDU header includes a destination address field and a path field, the BH routing configuration information includes at least one entry, each of the at least one entry includes a respective BAP address, a respective next-hop BAP address, and a respective BAP path identifier, and the BAP address of each of the at least one entry matches the destination address field; and the sending module is configured to rewrite the BAP data PDU header, and send the BAP data PDU to the egress link.

In a possible implementation, the communication apparatus further includes a processing module (or sometimes referred to as a processing unit), and the processing module is, for example, configured to select a first entry from the at least one entry, and select a link corresponding to a next-hop BAP address in the first entry as an egress link. In a possible implementation, the communication apparatus includes a storage module (or sometimes referred to as a storage unit), and the storage module may be configured to store a program or instructions.

According to a fourth aspect, an embodiment of this application provides a communication apparatus. The communication apparatus may be the donor node in the second aspect, or an electronic device (for example, a chip system) configured in the donor node. The communication apparatus includes a corresponding means (means) or module configured to perform the second aspect or any one of the possible implementations. For example, the communication apparatus includes a receiving module (or sometimes referred to as a receiving unit). Optionally, the communication apparatus further includes a sending module (or sometimes referred to as a sending unit) and a processing module (or sometimes referred to as a processing unit). Optionally, the receiving module and the sending module may be coupled. Optionally, the sending module is configured to send first information to a first IAB node. Optionally, the processing module is, for example, configured to determine first information, where the first information indicates that a first IAB node is a cluster header node, and the cluster header node is configured to select a first entry from at least one entry. In a possible implementation, the communication apparatus includes a storage module (or sometimes referred to as a storage unit), and the storage module may be configured to store a program or instructions.

According to a fifth aspect, an embodiment of this application provides a communication system. The communication system includes the communication apparatus in the third aspect or any one of the possible implementations of the third aspect and the communication apparatus in the fourth aspect or any one of the possible implementations of the fourth aspect.

According to a sixth aspect, an embodiment of this application provides a communication apparatus, including a processor and a memory. The memory is configured to store one or more computer programs, and the one or more computer programs include computer-executable instructions; and when the communication apparatus is run, the processor executes the one or more computer programs stored in the memory, so that the communication apparatus is enabled to perform the method according to either of the first aspect and the second aspect. Optionally, the communication apparatus further includes other components, for example, an antenna, an input/output module, an interface, and the like. Such components may be hardware, software, or a combination of software and hardware.

According to a seventh aspect, an embodiment of this application provides a chip system. The chip system includes a processor and an interface. The processor is configured to invoke instructions from the interface and run the instructions; and when the processor executes the instructions, the method according to either of the first aspect and the second aspect is implemented.

According to an eighth aspect, an embodiment of this application provides a computer-readable storage medium. The computer-readable storage medium is configured to store a computer program or instructions. When the computer program or the instructions are run, the method according to either of the first aspect and the second aspect is implemented.

According to a ninth aspect, an embodiment of this application provides a computer program product including instructions; and when the instructions are run by a communication apparatus, the communication apparatus is enabled to perform the method according to either of the first aspect and the second aspect.

According to a tenth aspect, an embodiment of this application provides a computer program product including instructions. When the computer program product is run on a computer, the method according to either of the first aspect and the second aspect is implemented.

For beneficial effects of the second aspect to the tenth aspect, refer to the beneficial effects described in the first aspect. Details are not described herein again.

### BRIEF DESCRIPTION OF DRAWINGS

FIG. 1 is a diagram of a scenario to which an embodiment of this application is applicable;
FIG. 2 is a diagram of a structure of an IAB system to which an embodiment of this application is applicable;
FIG. 3 is a diagram of several protocol stack architectures of IAB nodes in an IAB system to which an embodiment of this application is applicable;
FIG. 4a and FIG. 4b are diagrams of protocol stack architectures of parts in an IAB system to which an embodiment of this application is applicable;
FIG. 5a and FIG. 5b are diagrams of protocol stack architectures of parts in another IAB system to which an embodiment of this application is applicable;
FIG. 6 is a schematic flowchart of a communication method according to an embodiment of this application;
FIG. 7 is a diagram of another scenario to which an embodiment of this application is applicable;
FIG. 8 is a schematic flowchart of another communication method according to an embodiment of this application;
FIG. 9 to FIG. 14 are diagrams of protocol stack architectures of parts in a plurality of IAB systems to which an embodiment of this application is applicable; and
FIG. 15 and FIG. 16 are diagrams of architectures of two communication apparatuses according to embodiments of this application.

### DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.
1. A terminal device in embodiments of this application is a device having a wireless transceiver function, and may be a fixed device, a mobile device, a hand-held device, a wearable device, an in-vehicle device, or a wireless apparatus (for example, a communication module or a chip system) built in the foregoing device. The terminal device is configured to connect a person, an object, a machine, and the like, and may be widely used in various scenarios, for example, including but not limited to the following scenarios: cellular communication, device-to-device (device-to-device, D2D) communication, vehicle-to-everything (vehicle-to-everything, V2X) communication, machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (remote medicine), a smart grid (smart grid), smart furniture, a smart office, a smart wearable, smart transportation, a smart city (smart city), an uncrewed aerial vehicle, a robot, and the like. The terminal device may sometimes be referred to as user equipment (user equipment, UE), a terminal, an access station, a UE station, a remote station, a wireless communication device, a user apparatus, or the like. For ease of description, an example in which the terminal device is the UE is used for description in embodiments of this application.

A network device in embodiments of this application includes, for example, an access network element (or referred to as an access network device) and/or a core network element (or referred to as a core network device).

2. The access network element in embodiments of this application is a device having a wireless transceiver function, and is configured to communicate with the terminal device. The access network element includes, but is not limited to, a base station (BTS, NodeB, eNodeB/eNB, or gNodeB/gNB) in the communication system, a transmission reception point (tRANsmission reception point, TRP), a base station in subsequent evolution of 3GPP, an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support a network of same access technology mentioned above, or may support a network of different access technologies mentioned above. The base station may include one or more co-sited or non-co-sited transmission reception points. Alternatively, the network device may be a radio controller, a central unit (central unit, CU) that may alternatively be referred to as an aggregation unit, and/or a distributed unit (distributed unit, DU) in a cloud radio access network (cloud radio access network, C(R)AN) scenario. The network device may further be a server, a wearable device, an in-vehicle device, or the like. For example, a network device in the vehicle-to-everything (vehicle-to-everything, V2X) technology may be a road side unit (road side unit, RSU). The following uses an example in which the access network device is a base station for description. A plurality of network devices in the communication system may be base stations of a same type, or may be base stations of different types. The base station may communicate with a terminal device, or may communicate with a terminal device via a relay station. The terminal device may communicate with a plurality of base stations in different access technologies.

The core network element is configured to implement at least one of functions such as mobility management, data processing, session management, and policy and charging. Names of devices that implement core network functions in systems of different access technologies may be different. This is not limited in embodiments of this application. A 5G system is used as an example. The core network element includes an access and mobility management function (access and mobility management function, AMF), a session management function (session management function, SMF), a PCF, a user plane function (user plane function, UPF), and the like.

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the functions of the network device is a network device is used for describing the technical solutions provided in embodiments of this application.
3. A network element in embodiments of this application may be a single device, or may be an apparatus integrating a plurality of devices. The network element shown in embodiments of this application may alternatively be a logical concept, for example, a software module, or a network function corresponding to a service provided by each network element. The network function may be understood as a virtualized function in virtualization implementation, or may be understood as a network function that provides a service in a service-oriented network, for example, the session management function SMF dedicated to session management in a 5G core network. This is not specifically limited in embodiments of this application.
4. An IAB node is a wireless access point that provides a wireless access service for a terminal device. The IAB node includes a distributed unit (distributed unit, DU) and a mobile terminal (mobile terminal, MT). The MT may alternatively be understood as a component that is similar to the terminal device and that is present in the IAB node. The DU is relative to a function of a central unit (central unit, CU) of a network device. That the IAB node includes the MT and the DU may alternatively be described as follows: The IAB node includes an MT function and a DU function, or the IAB node has an MT role and a DU role. The MT of the IAB node may be used by the IAB node to communicate with a parent node of the IAB node, and the DU of the IAB node may be used by the IAB node to communicate with a child node of the IAB node. Both the MT and the DU of the IAB node may have complete transceiver modules. Both the MT and the DU may be logic modules. The MT and the DU of the IAB node may share a hardware module of the IAB node, for example, may share a transceiver antenna and a baseband processing module of the IAB node. The IAB node may be specifically implemented by using a small cell, customer premises equipment (customer premises equipment, CPE), a residential gateway (residential gateway, RG), or the like.
5. A donor node (donor node) provides a core network interface for a terminal device and a wireless access point that provides a wireless backhaul function for an IAB node. The donor node is a node that accesses a core network, and is a network device in a radio access network. For example, the donor node is a base station, a donor base station (donor base station), or an anchor base station in an IAB system. The donor node may be configured to be responsible for processing data at a packet data convergence protocol (packet data convergence protocol, PDCP) layer, and be responsible for receiving data from a core network and forwarding the data to an IAB node, receiving data from the IAB node and forwarding the data to a core network, and the like. The donor node may be, for example, a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), or a baseband unit (baseband unit, BBU), or the like; or may include a next generation NodeB (next generation NodeB, gNB) in a new radio (new radio, NR) system. The donor node may include a central unit (central unit, CU) and a distributed unit (distributed unit, DU). Alternatively, the donor node may be in a form in which a user plane (user plane, UP) (a CU-UP for short) and a control plane (control plane, CP) (a CU-CP for short) are split. In other words, the donor node includes the CU-CP and the CU-UP. One donor node may include one CU-CP and at least one CU-UP. For example, the donor node is implemented by using a gNB. Correspondingly, one gNB may include one gNB-CU-CP and at least one gNB-CU-UP. Alternatively, the donor node is implemented by using a donor-CU in an IAB system. Correspondingly, one donor-CU may include one donor-CU-CP and at least one donor-CU-UP. Optionally, the donor node may be considered as a special IAB node, or the donor node may be considered as a network device.
6. A link is a path between two adjacent nodes on a transmission path, and the node is, for example, an IAB node. The transmission path may be referred to as a path for short below. It may be understood that one transmission path may include a plurality of links.
7. A previous-hop node of a node is a last node that is on a path including the node and that receives data before the node.
8. A next-hop node of a node is a first node that is on a path including the node and that receives data after the node.
9. An ingress link of a node is a link between a node and a previous-hop node of the node, or may be referred to as a previous-hop link of the node.
10. An egress link of a node is a link between a node and a next-hop node of the node, or may be referred to as a next-hop link of the node.
11. An access IAB node is an IAB node accessed by a terminal device.
12. An intermediate IAB node is an IAB node that provides a wireless backhaul service for another IAB node (for example, an access IAB node or another intermediate IAB node). The access IAB node and the intermediate IAB node are relative to a specific terminal device. For example, an IAB node 1 may be an access IAB node relative to a terminal device 1, but the IAB node 1 may be an intermediate node relative to a terminal device 2. In other words, whether an IAB node is an access IAB node or an intermediate IAB node needs to be determined based on an application scenario.
13. A backhaul adaptation protocol (Backhaul Adaptation Protocol, BAP) layer is a new protocol layer introduced to a wireless backhaul link in an IAB network. The protocol layer is located above an RLC layer, and may be used to implement functions such as routing of a packet on the wireless backhaul link and bearer mapping (that is, RLC CH mapping). The start and end points of the BAP layer are located at an IAB node (access IAB node) connected to the UE and a donor-DU. The donor-CU allocates a unique BAP address to each IAB node and donor-DU controlled by the donor-CU, so that each IAB node and donor-DU in the network can be uniquely identified. If there are a plurality of paths, each BAP address may be associated with a plurality of path IDs. A source node (the donor-DU in a downlink direction or the access IAB node in an uplink direction) adds a BAP header (BAP PDU header) to packets at the BAP layer.

Content of the BAP PDU header includes a destination BAP address (BAP address) and a BAP path ID (BAP path ID), and the destination BAP address and the BAP path ID are collectively referred to as a BAP routing identifier (BAP routing ID). The BAP routing ID reflects an identifier of a destination node and a path to the destination node. The donor node configures a routing table for each IAB node, and content in the routing table includes a mapping relationship between a BAP routing ID and a next-hop BAP address. The routing table may indicate a specific child node (if in DL) or a specific parent node (if in UL) to which a packet needs to be forwarded. In addition to a routing function, the BAP protocol is further used to perform mapping between ingress and egress BH RLC channels, and a mapping rule is also configured by the donor node. It may be understood as finer-grained routing, that is, an RLC channel is further selected after a next-hop destination BAP address (that is, determining a next-hop link) is determined.

### 14. BAP-layer rerouting (rerouting) function.

UL transmission is used as an example. In NR, UE is allowed to establish dual connectivity (DC, Dual Connectivity) with two base stations, to increase a data rate or improve transmission robustness. As special UE, an IAB-MT may also establish DC with two parent IAB-DUs. Therefore, for UL transmission, after the IAB-MT queries a routing table, if an RLF occurs on a link corresponding to a next-hop BAP address based on a BAP routing ID, rerouting (rerouting) is performed. Rerouting principles are as follows:
(1) First, searching for a next-hop BAP address based on a BAP routing ID is degraded to searching for a next-hop BAP address based on a BAP address in the BAP routing ID; and a path ID is not restricted. That is, a next-hop node corresponding to another path that can reach a same destination BAP address is searched. For example, if an RLF occurs on a link on which {BAP address 1 + Path ID 1} is mapped to a next-hop BAP address 1, the routing table includes an entry in which {BAP address 1 + Path ID 2} is mapped to a next-hop BAP address 2, and no RLF occurs on a link to the next-hop BAP address 2, a packet is directly sent to a node with the next-hop BAP address 2, and a next-hop node continues to perform routing on the packet based on the BAP address 1. In this case, the path ID does not work. This process is introduced in Rel-16 and is alternatively referred to as backup path-based rerouting, and can be used in both UL and DL. An entry in which {BAP address 1 + Path ID 2} corresponding to the backup path is mapped to the next-hop BAP address 2 is also pre-configured by using an F1AP message. In the conventional technology, for UL transmission, a link with an IAB-DU as an egress is not configured as a backup path, and a link from the DU definitely cannot reach the donor-DU. The same applies to DL transmission.
(2) After the determining performed in (1), if no backup path exists or an RLF occurs on all backup paths, it indicates that there is no data path to a same donor-DU, and a network can only be accessed via only another donor-DU. In this case, a rerouting mechanism based on header rewriting (rewriting) is introduced in Rel-17, allowing an IAB node to select another donor-DU to access a network. In this case, an IAB-MT only needs to check an available link. In a routing table (routing table) configured by using the F1AP in Table 1, based on a BAP routing ID (corresponding to a new donor-DU) corresponding to a next-hop BAP address of the link, the BAP routing ID is used to replace a current BAP routing ID in a BAP header, and then a packet is sent to a node with the next-hop BAP address in the routing table. In this case, both a destination BAP address and a path ID are changed, and the BAP routing ID in the BAP header is rewritten. After receiving the BAP header, a next-hop node performs operations based on the new BAP routing ID. Due to the change of a destination node, the method is only applicable to UL transmission and the network is accessed via another donor-DU, but is not applicable to DL transmission because data cannot reach specific UE via another IAB node.

**Table 1: Routing table configured by using F1AP**

| F1AP: BAP MAPPING CONFIGURATION | |
|---|---|
| Message Type | |
| Transaction ID | |
| BH Routing Information Added List | |
| | >BH Routing Information Added List Item |
| | >>BAP Routing ID |
| | >>Next-Hop BAP Address |
| | >>Non-F1-terminating Topology Indicator |

Table 1 is an example of the routing table configured by using the F1AP. The routing table may include a message type "Message Type", a transaction ID "Transaction ID", and a backhaul routing information added list "BH Routing Information Added List". It may be understood that, the "BH Routing Information Added List Item" field in BH Routing Information Added List in Table 1 may be understood as an entry, and content of the entry may include a BAP address and a BAP path identifier, that is, the "BAP Routing ID" field, a next-hop BAP address, that is, the "Next-Hop BAP Address" field, and the BAP path identifier, that is, the "BH Routing Information Added List" field. Correspondingly, the "BH Routing Information Added List" field may include one or more entries, and each entry may include a BAP address, a next-hop BAP address, and a BAP path identifier. BAP addresses in different entries may be the same, and next-hop BAP addresses and BAP path identifiers in different entries may be different.

15. An F1 interface is a logical interface between a DU part of an IAB node and a donor node (or a donor-CU or donor-DU). The F1 interface may alternatively be referred to as an F1* interface that supports a user plane and a control plane. A protocol layer of the F1 interface is a communication protocol layer on the F1 interface. For example, a user plane protocol layer of the F1 interface may include one or more of an IP layer, a UDP layer, and a GTP-U layer. Optionally, the user plane protocol layer of the F1 interface further includes a PDCP layer and/or an IP security (IP Security, IPsec for short) layer. For example, a control plane protocol layer of the F1 interface may include one or more of an IP layer, an F1AP layer, and an SCTP layer. Optionally, the control plane protocol layer of the F1 interface further includes one or more of a PDCP layer, an IPsec layer, and a datagram transport layer security (datagram transport layer security, DTLS for short) layer.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. At least one of the following items (pieces) or a similar expression thereof indicates any combination of these items, including any combination of a single item (piece) or a plurality of items (pieces). For example, at least one of a, b, or c indicates a, b, c, a and b, a and c, b and c, or a, b, and c, where a, b, and c may be singular or plural.

To improve spectrum utilization, base stations will be deployed more densely in the future. However, the base stations are usually connected to a core network through optical fibers. If a large quantity of base stations are deployed, a large quantity of optical fibers need to be deployed, and consequently deployment costs of the optical fibers are extremely high. Therefore, an IAB solution can be used to reduce the deployment costs of some optical fibers. In the IAB solution, an IAB node may provide a wireless access service for a terminal device via a wireless access link (access link, AL), and the IAB node may be connected to a donor node via a wireless backhaul link (backhaul link, BL), to transmit data from the terminal device. The wireless access link is referred to as an access link for short below, and the wireless backhaul link is referred to as a backhaul link for short below.

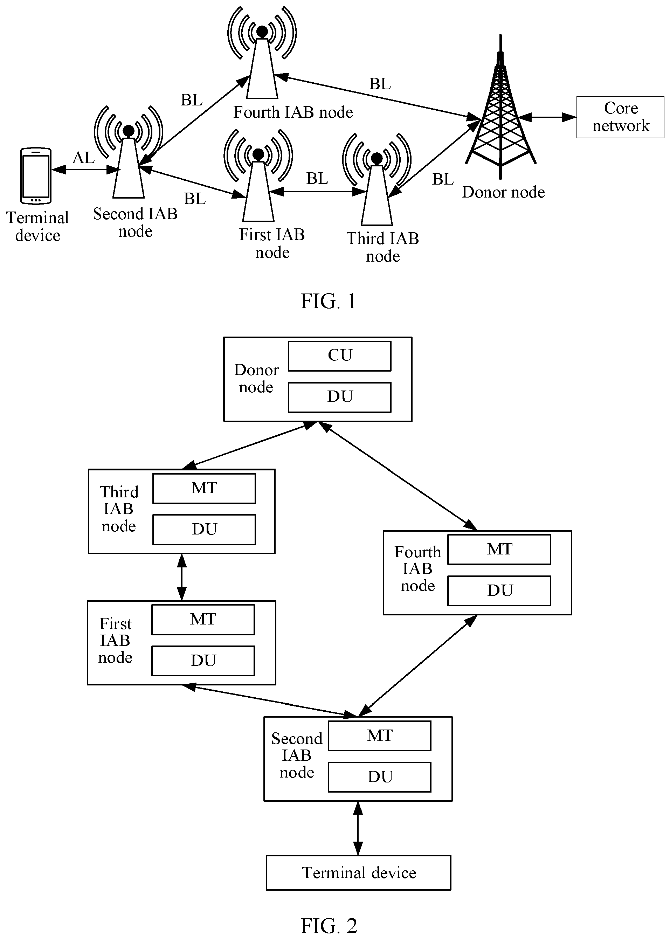

FIG. 1 is a diagram of a scenario to which an embodiment of this application is applicable. Alternatively, FIG. 1 may be understood as a diagram of an architecture of an IAB system. As shown in FIG. 1, the scenario includes a terminal device, one or more IAB nodes, a donor node, and a core network. In FIG. 1, an example in which the one or more IAB nodes include a first IAB node, a second IAB node, a third IAB node, and a fourth IAB node is used.

The one or more IAB nodes may provide a wireless access service for the terminal device, and may be connected to the donor node via a backhaul link. The donor node may provide a wireless backhaul function for the one or more IAB nodes, so that the terminal device served by the one or more IAB nodes communicates with the core network. For example, in a standalone (standalone, SA) 5G communication system, any one of the one or more IAB nodes may, via the donor node, be connected to a core network (5G core, 5GC) of the 5G communication system via a link. In a non-standalone (non-standalone, NSA) 5G communication system, any one of the one or more IAB nodes may be connected to an evolved packet core network (evolved packet core, EPC) via an eNB on a control plane, and connected to the EPC via the donor node and an eNB on a user plane.

To ensure reliability of service transmission, the IAB system supports multi-hop IAB networking. Correspondingly, there may be a plurality of paths between the terminal device and the donor node. On a path, there is a clear hierarchical relationship between a plurality of IAB nodes and a donor node that serves the plurality of IAB nodes.

One IAB node may consider a node that provides a backhaul service for the IAB node as a parent node. Alternatively, it may be understood as that an adjacent upstream (or upper-level) node of a donor node closer to an IAB node is referred to as a parent node of the IAB node. Alternatively, it may be understood as that an IAB node connected to an MT of one IAB node is a parent node of the IAB node. Correspondingly, one IAB node may be considered as a child node of a parent node of the IAB node. Alternatively, it may be understood as that an adjacent downstream (lower-level) node of a donor node far away from an IAB node is referred to as a child node of the IAB node. Alternatively, it may be understood as that an IAB node connected to a DU of one IAB node is a child node of the IAB node.

For example, as shown in FIG. 1, parent nodes of the second IAB node include the first IAB node and the fourth IAB node. In other words, both a child node of the first IAB node and a child node of the fourth IAB node include the second IAB node. A parent node of the first IAB node includes the third IAB node. In other words, a child node of the third IAB node includes the first IAB node. Both a parent node of the fourth IAB node and a parent node of the third IAB node include the donor node. In other words, child nodes of the donor node include the fourth IAB node and the third IAB node.

As described above, in the IAB system, one path between the terminal device and the donor node may include one or more IAB nodes. Each of the one or more IAB nodes needs to maintain a backhaul link (a parent link) oriented to a parent node, and further needs to maintain a radio link (a child link) oriented to a child node. If one IAB node is a node accessed by the terminal device, there is an access link between the IAB node and a child node (that is, the terminal device). If one IAB node is a node that provides a backhaul service for another IAB node, there is a backhaul link between the IAB node and a child node (that is, the another IAB node). As shown in FIG. 1, the terminal device accesses the second IAB node via an access link, the second IAB node accesses the fourth IAB node via a backhaul link, and the fourth IAB node accesses the donor node via a backhaul link. In addition, the second IAB node may access the first IAB node via a backhaul link, the first IAB node accesses the third IAB node via a backhaul link, and the third IAB node accesses the donor node via a backhaul link. In FIG. 1, "AL" indicates an access link, and "BL" indicates a backhaul link.

Uplink data may be transmitted to the donor node via the one or more IAB nodes, and then transmitted by the donor node to a device (specifically, for example, a mobile gateway device) in the core network. The mobile gateway device is, for example, a UPF network element. As shown in FIG. 1, there are two paths for transmitting the uplink data from the terminal device to the core network. The two paths are specifically: Terminal device → second IAB node → fourth IAB node → donor node → core network, and Terminal device → second IAB node → first IAB node → third IAB node → donor node → core network.

Downlink data may be transmitted from the core network to the donor node, and then transmitted to the terminal device via the one or more IAB nodes. As shown in FIG. 1, there are two paths for transmitting the downlink data to the terminal device. The two paths are specifically: Core network → donor node → fourth IAB node → second IAB node → terminal device, and Core network → donor node → third IAB node → first IAB node → second IAB node → terminal device.

The second IAB node in FIG. 1 may be considered as an access IAB node, and the first IAB node, the third IAB node, and the fourth IAB node may all be considered as intermediate access IAB nodes. In addition, in FIG. 1, an example in which there is one terminal device, there are four IAB nodes, and there is one donor node is used. Actually, the quantities of terminal devices, IAB nodes, and donor nodes are not limited. In a possible implementation, the terminal device may further directly communicate with the donor node. This is not illustrated in FIG. 1.

Structures of any two IAB nodes in FIG. 1 may be the same. The following provides description with reference to a diagram of a structure of an IAB system shown in FIG. 2. In FIG. 2, a terminal device, a first IAB node, a second IAB node, a third IAB node, a fourth IAB node, and a donor node are included. The first IAB node in FIG. 2 is, for example, the first IAB node in FIG. 1, the second IAB node is, for example, the second IAB node in FIG. 1, the third IAB node is, for example, the third IAB node in FIG. 1, the fourth IAB node is, for example, the fourth IAB node in FIG. 1, and the donor node is, for example, the donor node in FIG. 1.

As shown in FIG. 2, any IAB node may include a DU and an MT, and the donor node may include a DU and a CU. With reference to the diagram of the structure of the IAB system shown in FIG. 2, the following separately describes paths for transmitting uplink data and downlink data.

There are two paths for transmitting the uplink data. The two paths are specifically: Terminal device → DU of second IAB node → MT of second IAB node → DU of fourth IAB node → MT of fourth IAB node → donor node, and Terminal device → DU of second IAB node → MT of second IAB node → DU of first IAB node → MT of first IAB node → DU of third IAB node → MT of third IAB node → donor node. There are two paths for transmitting the downlink data. The two paths are specifically: Donor node → MT of fourth IAB node → DU of fourth IAB node → MT of second IAB node → DU of second IAB node → terminal device, and Donor node → MT of third IAB node → DU of third IAB node → MT of first IAB node → DU of first IAB node → MT of second IAB node → DU of second IAB node → terminal device.

The CU and the DU of the donor node may be connected through an F1 interface. The F1 interface may alternatively be referred to as an F1* interface. The CU may be connected to the core network through a next generation (next generation, NG) interface. Optionally, the F1 interface may include a control plane interface (F1-C) and a user plane interface (F1-U).

In future communication, the IAB node is still referred to as an IAB node, or may have another name. The DU of the IAB node is still referred to as a DU of the IAB node, or may have another name. The MT of the IAB node is still referred to as an MT of the IAB node, or may have another name. The donor node is still referred to as a donor node, or may have another name. This is not limited in embodiments of this application.

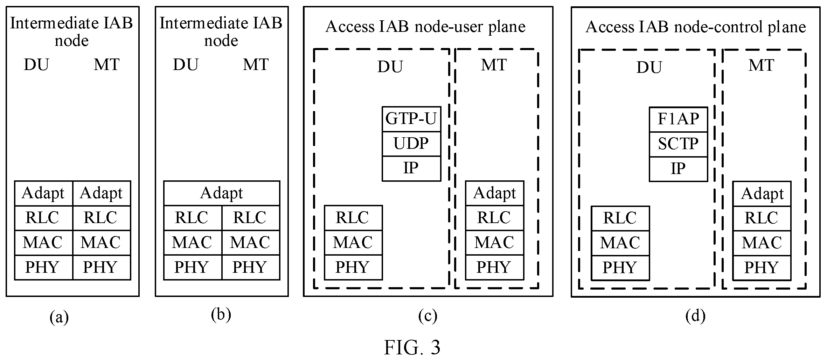

With reference to a diagram of several protocol stack architectures of IAB nodes in an IAB system shown in FIG. 3, the following uses an example to describe the protocol stack architecture of the IAB node. An intermediate IAB node and an access IAB node are included in FIG. 3. The intermediate IAB node may be, for example, the first IAB node, the third IAB node, or the fourth IAB node in FIG. 1 or FIG. 2; and the access IAB node may be, for example, the second IAB node in FIG. 1 or FIG. 2.

(a) in FIG. 3 is a diagram of a protocol stack architecture of an intermediate IAB node. As shown in (a) in FIG. 3, protocol stack architectures of a DU and an MT of the intermediate IAB node may be the same. As shown in (a) in FIG. 3, protocol stacks of the DU and the MT of the intermediate IAB node each include an adaptation (adaptation) layer (layer), a radio link control (radio link control, RLC) layer, a media access control (media access control, MAC) layer, and a physical (physical, PHY) layer.

(b) in FIG. 3 is a diagram of a protocol stack architecture of another intermediate IAB node. As shown in (b) in FIG. 3, protocol stack architectures of a DU and an MT of the intermediate IAB node are also the same. A difference from (a) in FIG. 3 is that the DU and the MT of the intermediate node IAB in (b) in FIG. 3 share an adaptation layer.

(c) in FIG. 3 is a diagram of a user plane protocol stack architecture of an access IAB node. As shown in (c) in FIG. 3, user plane protocol stack architectures of an MT and a DU of the access IAB node are different. The DU of the access IAB node may communicate with the terminal device. Therefore, a protocol stack of the DU of the access IAB node adapts to a protocol stack of the terminal device. For example, a user plane protocol stack of the DU of the access IAB node includes a general packet radio service tunneling protocol (general packet radio service tunneling protocol-U, GTP-U) layer, a user datagram protocol (user datagram protocol, UDP) layer, an internet protocol (internet protocol, IP) layer, an RLC layer, a MAC layer, and a PHY layer. The MT of the access IAB node may communicate with another IAB node. Therefore, a protocol stack of the MT of the access IAB node may adapt to a protocol stack of the intermediate IAB node. For example, a user plane protocol stack of the MT of the access IAB node includes an adaptation layer, an RLC layer, a MAC layer, and a PHY layer.

(d) in FIG. 3 is a diagram of a control plane protocol stack architecture of an access IAB node. As shown in (d) in FIG. 3, a control plane protocol stack of a DU of the access IAB node includes an F1 application protocol (F1 application protocol, F1AP), a stream control transmission protocol (stream control transmission protocol, SCTP) layer, an IP layer, an RLC layer, a MAC layer, and a PHY layer. A control plane protocol stack of an MT of the access IAB node includes an adaptation layer, an RLC layer, a MAC layer, a PHY layer, and the like.

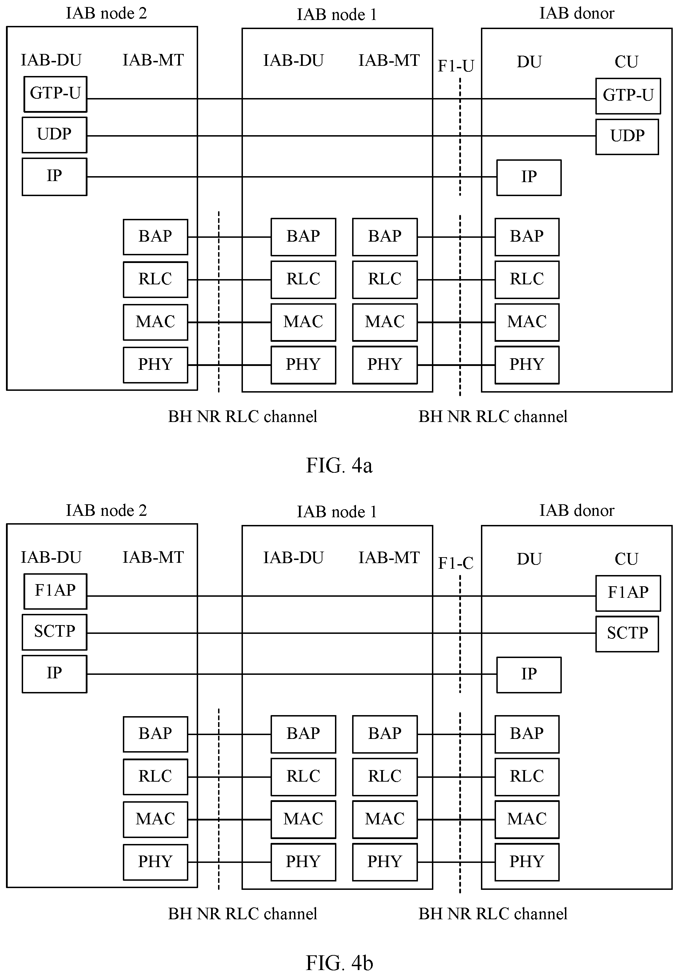

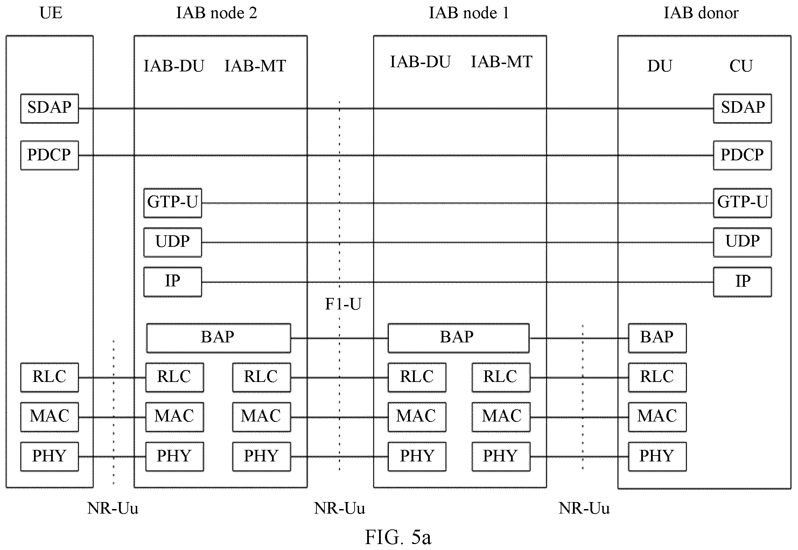

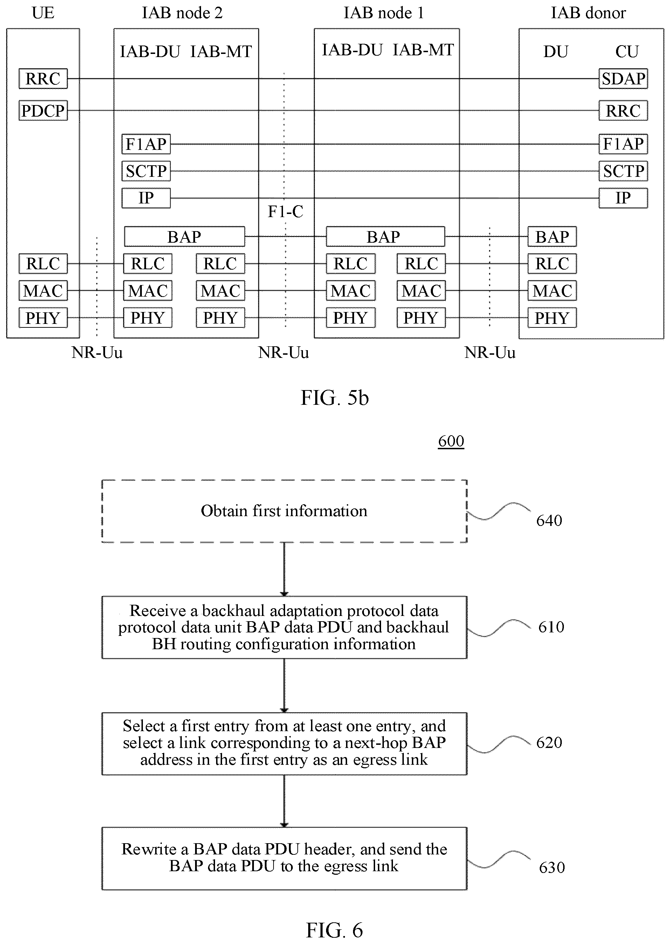

FIG. 4 is a diagram of user plane and control plane protocol stacks of an IAB network from a network perspective. FIG. 5 is a diagram of user plane and control plane protocol stacks of an IAB network from a UE perspective. In FIG. 4 and FIG. 5, a block with a word BAP is referred to as a "BAP entity (BAP entity)". Each IAB node has two BAP entities, where one for an MT and the other for a DU, and BAP addresses of the two BAP entities are the same. It may be understood that, in FIG. 4, IAB node only one of the two BAP entities is marked in an IAB node 2, indicating that when the IAB node 2 is used as an access IAB node of UE, a BAP packet is generated by an MT of the IAB node 2 and sent to a parent node, and a BAP function of a DU part of the IAB node 2 is not reflected. A donor has only one BAP entity located at a donor-DU. FIG. 5 shows a UE perspective. It may be understood that, because the UE does not care about an internal structure of an IAB node, IAB node only one BAP entity is marked in the IAB node in FIG. 5, but the IAB node may have two BAP entities, where each of the two BAP entities has transmitting and receiving functions, and the transmitting and receiving functions are generally referred to as a transmitting part and a receiving part.

Protocol layers in FIG. 4 and FIG. 5 are a packet data convergence protocol (Packet Data Convergence Protocol, PDCP for short) layer, a GTP-U layer, a UDP layer, an IP layer, an L2 layer (layer 2), an L1 layer (layer 1), an RLC layer, a medium MAC layer, a PHY layer, a radio resource control (Radio Resource Control, RRC for short) layer, an F1AP layer, and an SCTP layer. The L2 layer is a link layer. For example, the L2 layer may be a data link layer in an open systems interconnection (Open Systems Interconnection, OSI for short) reference model. The L1 layer may be a physical layer. For example, the L1 layer may be a physical layer in an OSI reference model.

With reference to FIG. 5, a process of uplink sending of a packet of UE to a donor via an IAB node may be expressed as follows.
(1) The UE sends a packet to an IAB-DU accessed by the UE, where the packet has a complete user plane or control plane protocol stack and a header of each layer.
(2) After receiving the packet, the IAB-DU removes headers of the PHY layer, the MAC layer, and the RLC layer to obtain a packet of the PDCP layer.
(3) For user-plane data, the IAB-DU encapsulates headers of the GTP-U layer, the UDP layer, and the IP layer outside the packet of the PDCP layer; and for control-plane data, the IAB-DU encapsulates headers of the F1AP layer, the SCTP layer, and the IP layer outside the PDCP layer. Subsequently, the IAB-DU transfers the packet to a transmitting part of a BAP entity on an MT side of a same node.
(4) The transmitting part of the BAP entity of the IAB-MT generates a BAP routing ID for the packet that arrives from the upper layer, and adds the BAP routing ID to a BAP header, to generate a BAP packet. The BAP routing ID is generated based on a TEID (Tunnel Endpoint ID) of the added GTP-U and an IP address in step (3). A mapping relationship between {TEID + IP address} and the BAP routing ID (referred to as uplink mapping, UL Mapping) is configured by the donor-CU to the IAB-DU in advance by using the F1AP message, and then the IAB-DU notifies the IAB-MT through an internal interface. In addition, the F1AP message further includes indicators of a next-hop address and an egress RLC CH ID, that is, the F1AP indicates a mapping relationship among {TEID + IP address}, the BAP routing ID, and the {Next-hop BAP address + Egress RLC CH ID}. The IAB-MT adds headers of the RLC layer, the MAC layer, and the PHY layer to the BAP packet in sequence, and sends the packet through a Uu interface via the egress RLC CH on a link corresponding to the next-hop BAP address.
(5) After receiving the packet, the parent node IAB-DU (or the donor-DU) on a corresponding link decapsulates the headers of the PHY layer, the MAC layer, and the RLC layer, to obtain the BAP packet. A BAP entity of the DU compares a BAP address in a BAP header with a BAP address of the node, to determine whether the BAP packet is sent to the node.
   a. If the BAP packet is sent to the node (indicating that uplink data reaches the donor-DU), the BAP header is removed, and the packet is sent to an upper layer. A function of the BAP layer is terminated. The donor-DU performs handling at the IP layer and sends the packet to the donor-CU (if the donor-DU and the donor-CU are separately deployed, the donor-DU may need IP routing to the donor-CU). The donor-CU performs UDP and GTP-U handling, or SCTP and F1AP handling. After the handling is performed, the packet is sent to a core network, and a function of an access network is terminated.
   b. If the BAP packet is not sent to the node, the BAP entity of the IAB-DU delivers the packet to the transmitting part of the BAP entity of the IAB-MT of the same node. The transmitting part of the BAP entity of the IAB-MT performs operations such as header rewriting (header rewriting), routing, and RLC CH mapping, and finally sends the packet to a next-hop node via a selected link and an RLC CH, and then proceeds to step (5) for determining. The header rewriting herein is used for transmission or rerouting of a packet across CU topologies. The header rewriting is a BAP layer function of an intermediate-hop IAB node, and is used for rewriting a BAP header. If the intermediate-hop IAB node does not involve transmission or rerouting across CU topologies, the header rewriting is not performed, and for the access IAB node (UL start point) or the donor-DU (DL start point) in step (4), only routing and RLC CH mapping are performed at the BAP layer of the access IAB node or the donor-DU, and the header rewriting is not required. Routing and RLC CH mapping rules of the intermediate-hop node are different from those of the access IAB node. For the access IAB node, because there is no ingress BH link, the BAP routing ID and {Next-hop BAP address + Egress RLC CH ID} are indicated at a time based on {TEID + IP address} in step (4). For the intermediate-hop node, the routing mapping indicates to select the next-hop BAP address based on the BAP routing ID in the BAP header, the RLC CH mapping indicates to select the egress RLC CH ID based on an ingress RLC CH ID, and the routing mapping and the RLC CH mapping rules are also configured by the donor-CU by using an F1AP message.

The following describes a method provided in embodiments of this application with reference to the accompanying drawings. In the accompanying drawings corresponding to embodiments of this application, all steps represented by using dashed lines are optional steps. In addition, in a process of describing embodiments of this application, an example in which the technical solutions in embodiments of this application are applied to the 5G system is used. Therefore, each network element is described by using a corresponding network element in the 5G system. If the technical solutions provided in embodiments of this application are applied to another communication system, a name and/or a function of the network element may be changed. This is not limited herein.

FIG. 6 is a schematic flowchart of a communication method according to an embodiment of this application. The schematic flowchart shown in FIG. 6 is applied to a first integrated access and backhaul IAB node, and includes the following steps.

S610: Receive a backhaul adaptation protocol BAP data protocol data unit BAP PDU and backhaul BH routing configuration information. Optionally, a BAP data PDU header includes a destination address field and a path field, the BH routing configuration information includes at least one entry, and each of the at least one entry includes a respective BAP address, a respective next-hop BAP address, and a respective BAP path identifier. Optionally, the BAP address of each of the at least one entry matches the destination address field.

It may be understood that, the BH routing configuration information in this application may include one or more entries, and each entry may include information such as a BAP address, a next-hop BAP address, and a BAP path identifier. Optionally, BAP addresses in different entries in the BH routing configuration information may be the same, and next-hop BAP addresses and BAP path identifiers in different entries may be different.

Optionally, the first IAB node in this application may alternatively be referred to as a cluster header (cluster header) node or a function node. For example, the first IAB node may be a node that has a function of selecting a transmission path of a BAP packet based on channel quality and modifying a BAP PDU header. It should be noted that, a name of a node that has the function is not specifically limited in this application.

Optionally, the destination address field in the BAP data PDU header is a destination BAP address (BAP address), and the path field in the BAP data PDU header is a BAP path ID (BAP path ID). It may be understood that, the destination BAP address and the BAP path ID are collectively referred to as a BAP routing identifier (BAP routing ID). The BAP routing ID reflects an identifier of a destination node and a path used by the first IAB node to reach the destination node.

S620: Select a first entry from the at least one entry, and select a link corresponding to a next-hop BAP address in the first entry as an egress link.

The first entry may be determined from the at least one entry based on quality of a channel between the first IAB node and a next-hop node corresponding to a next-hop BAP address in the one or more entries.

For example, the first entry may be determined based on the quality of the channel between the first IAB node and the next-hop node corresponding to the next-hop BAP address in the at least one entry in any one of the following manners.
(a) An entry corresponding to a first next-hop BAP address is determined as the first entry, where quality of a channel between the first IAB node and a next-hop node corresponding to the first next-hop BAP address meets a first preset condition. It may be understood that, the first preset condition may be that channel quality is optimal. Correspondingly, the first IAB node selects an entry with optimal channel quality from the at least one entry as the first entry. It may be understood that, the optimal channel quality in the first preset condition may indicate a case in which one or more channel quality parameters in channel parameters are optimal. Alternatively, the first preset condition may be that the channel quality is greater than or equal to a first preset value. The first preset condition may be preset, or may be configured by a network device. A setting manner of the first preset condition and specific content of the preset condition are not limited in this embodiment of this application. The first preset condition may be different based on different requirements or scenarios. For example, the first IAB node may first find, in the at least one entry in a polling manner, an entry that meets the first preset condition as the first entry.
(b) An entry corresponding to a first next-hop BAP address is determined as the first entry, where a value of a path selection function between the first IAB node and a next-hop node corresponding to the first next-hop BAP address meets a second preset condition, where the value of the path selection function is determined based on the path selection function and quality of a channel between the first IAB node and the next-hop node corresponding to the first next-hop BAP address, and/or a path priority, and/or a cost metric. For example, the value of the path selection function may be determined based on the quality of the channel and the path selection function, or may be determined based on the path priority and the path selection function, or may be determined based on the cost metric and the path selection function. A plurality of combination manners are not limited in this application. It may be understood that, the second preset condition may be that the value of the path selection function is the largest or the smallest. Correspondingly, the first IAB node selects an entry with the largest or the smallest value of the path selection function from the at least one entry as the first entry. The second preset condition may alternatively be a preset value range of the path selection function, that is, the first IAB node first finds, in the at least one entry in a polling manner, an entry that meets the value range of the path selection function as the first entry.
(c) An entry corresponding to a first next-hop BAP address is determined as the first entry, where a value of a path selection function between the first IAB node and a next-hop node corresponding to the first next-hop BAP address meets a third preset condition, where the value of the path selection function is determined based on the path selection function and quality of a channel between the first IAB node and the next-hop node corresponding to the first next-hop BAP address, and/or a number of hops from the next-hop node corresponding to the first next-hop BAP address to a destination node, and/or a position of the next-hop node corresponding to the first next-hop BAP address. For example, the value of the path selection function may be determined based on the number of hops of the node and the path selection function, or may be determined based on the position of the node and the path selection function, or may be determined based on the cost metric and the path selection function. A plurality of combination manners are not limited in this application. It may be understood that, the third preset condition may be that the value of the path selection function is the largest or the smallest. Correspondingly, the first IAB node selects an entry with the largest or the smallest value of the path selection function from the at least one entry as the first entry. The third preset condition may alternatively be a preset value range of the path selection function, that is, the first IAB node first finds, in the at least one entry in a polling manner, an entry that meets the value range of the path selection function as the first entry.

In the foregoing conditions, the quality of the channel between the first IAB node and the next-hop node corresponding to the next-hop BAP address in the at least one entry may be considered. Optionally, a possible manner of obtaining the channel quality is that a PHY layer of the first IAB node provides a channel quality measurement report to a BAP layer. The channel quality may be one or more of a signal-to-noise ratio (signal-to-noise ratio, SNR), a signal to interference plus noise ratio (signal to interference plus noise ratio, SINR), a channel quality indicator (channel quality indicator, CQI), a received signal strength indicator (received signal strength indicator, RSSI), or a reference signal received power (reference signal received power, RSRP). It may be understood that, the optimal channel quality in the first preset condition may indicate a case in which one or more channel quality parameters in channel parameters are optimal. For example, the optimal channel quality may be a maximum SNR and/or a maximum SINR and/or an optimal CQI and/or a maximum RSSI and/or a maximum RSRP. The optimal quality is not specifically limited in this application.

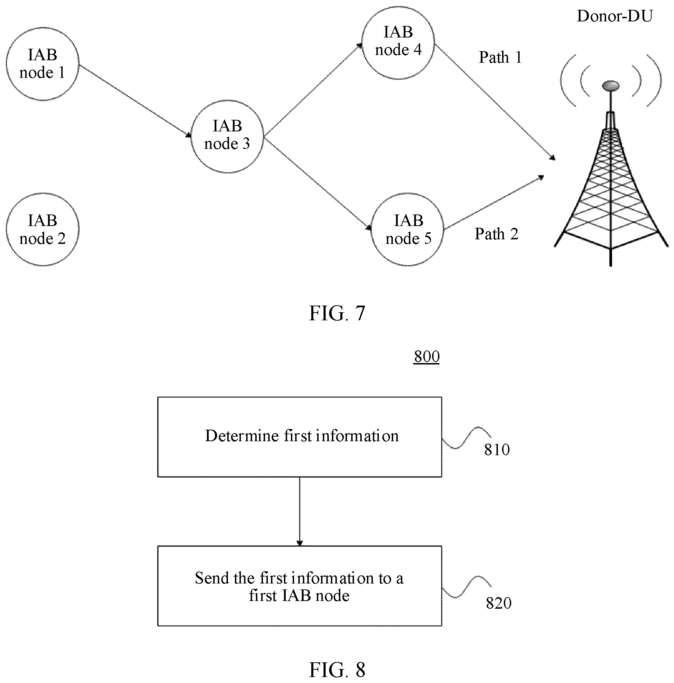

In the condition (a), a next-hop node with channel quality meeting the first preset condition is selected. An example in which the first preset condition is optimal channel quality is used herein for description. For example, in FIG. 7, a path of IAB node 1 → IAB node 3 → IAB node 4 → donor-DU has a path ID 1, and a path of IAB node 1 → IAB node 3 → IAB node 5 → donor-DU has a path ID 2. The IAB node 3 is a cluster header node. The cluster header node selects the IAB node 5 as a next-hop node based on a channel quality measurement report, for example, a report in which a CQI between IAB node 3 → IAB node 5 is greater than a CQI between IAB node 3 → IAB node 4. It may be understood that, in this embodiment, the channel quality measurement report is not limited to including the CQI, and the cluster header may further determine the next-hop node based on another parameter or a plurality of parameters.

Optionally, in the condition (b), the path priority and/or the cost metric are/is involved, and a new information element may be added to an existing routing table to indicate a priority or a cost metric of a next-hop node or a path. Configuration of the routing table obtained by adding the information element is shown in Table 2. In Table 2, the newly added "Priority/Cost" is a newly added priority or cost metric, and the "Non-F1-terminating Topology Indicator" is a non-F1-terminating topology indicator. It may be understood that, configuration and definitions of other parameters in Table 2 are consistent with those in Table 1. Details are not described herein again.

**Table 2: BAP MAPPING CONFIGURATION message after new information element is added**

| F1AP: BAP MAPPING CONFIGURATION | | |
|---|---|---|
| BH Routing Information Added List | | |
| | >BH Routing Information Added List Item | |
| | | >>BAP Routing ID |
| | >>Next-Hop BAP Address | |
| | >>Priority/Cost | |
| | >>Non-F1-terminating Topology Indicator | |

Optionally, in the condition (b), the path priority or the cost metric is involved, or a BAP routing priority/cost mapping table may be introduced, and the BAP routing priority/cost mapping table is delivered by the CU to the cluster header node by using an RRC message, an F1AP, or a new message. This is not specifically limited in this application. Content of the BAP routing priority/cost mapping table may include a mapping relationship between a BAP routing ID and a priority/cost, for example, as shown in Table 3.

**Table 3: BAP routing priority/cost mapping table**

| F1AP or RRC |
|---|
| BAP Routing ID |
| Priority/Cost |

In this way, in the condition (b), the cluster header node may obtain a priority or a cost metric of a candidate path by configuring Table 2 or Table 3. The path selection function in the condition (b) is a function related to the channel quality, the path priority, or the cost metric. For example, in FIG. 7, assuming that the path selection function is a function related to the channel quality and the path priority, and is represented by *f(CQI, Priority),* a next-hop node with the value of the path selection function meeting the second preset condition is selected, for example, *f (CQI₂, Priority*₂*)* between IAB node 3 → IAB node 5 is greater than *f(CQI*₁*, Priority*₁) between IAB node 3 → IAB node 4, and the cluster header node selects the IAB node 5 as the next-hop node.

Optionally, in the condition (c), the number of hops from the next-hop node to the destination node or the position of the next-hop node is involved, and a new information element may be added to an existing routing table to indicate the number of hops from the next-hop node to the destination node or the position of the next-hop node. Configuration of the routing table obtained by adding the information element is shown in Table 4.

**Table 4: BAP MAPPING CONFIGURATION message after new information element is added**

| F1AP: BAP MAPPING CONFIGURATION | |
|---|---|
| BH Routing Information Added List | |
| | >BH Routing Information Added List Item |
| | >>BAP Routing ID |
| | >>Next-Hop BAP Address |
| | >> Hop Number to Destination/Next-Hop Position |
| | >>Non-F1-terminating Topology Indicator |

Optionally, in the condition (c), the number of hops from the next-hop node to the destination node or the position of the next-hop node is involved, or a BAP routing hop number to destination/next-hop position (next-hop position) mapping table may be introduced and delivered by the CU to the cluster header node by using an RRC message, an F1AP, or a new message. Optionally, content of the BAP routing hop number to destination/next-hop position mapping table may include a mapping relationship between a BAP routing ID and a hop number to destination/next-hop position, for example, as shown in Table 5.

**Table 5: Mapping table between BAP routing ID and hop number to destination/next-hop position**

| F1AP or RRC |
|---|
| BAP Routing ID |
| Hop Number to Destination/Next-Hop Position |

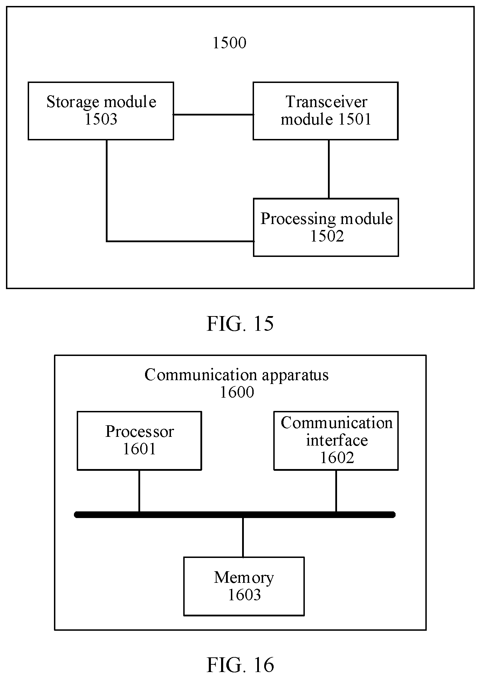

The cluster header node may obtain the number of hops from the next-hop node to the destination node or the position of the next-hop node by using the table corresponding to FIG. 15 or FIG. 16.

In this way, the path selection function in the condition (c) is a function related to the channel quality, the number of hops from the next-hop node to the destination node, or the position of the next-hop node. For another example, in FIG. 7, assuming that the path selection function is a function related to the channel quality and the position of the next-hop node, and is represented by *f(CQI, Position),* a node with the value of the path selection function meeting the third preset condition is selected as the next-hop node, for example, *f(CQI₂, Position₂)* between IAB node 3 → IAB node 5 is greater than *f(CQI₁, Position*₁) between IAB node 3 → IAB node 4, and the cluster header node selects the IAB node 5 as the next-hop node.

S630: Rewrite the BAP data PDU header, and send the BAP data PDU to an egress link.

Optionally, rewriting the BAP data PDU header includes rewriting the path field to a BAP path identifier in the first entry. For example, the first IAB node determines the first entry in S620, updates a BAP path ID in the BAP PDU header to a new path ID (that is, the BAP path identifier in the first entry), and sends an updated BAP data PDU to a next-hop node in the first entry.

Optionally, the method 600 further includes step S640, and step S640 is performed before step S610.

S640: Obtain first information. The first information indicates the first IAB node to select the first entry from the at least one entry.

For example, the first information may indicate that the first IAB node is a cluster header node, and the cluster header node is configured to select the first entry from the at least one entry.

It may be understood that, the cluster header node may be pre-configured or predefined, and whether an IAB node is the cluster header node may be determined in a plurality of manners. Optionally, the cluster header node may be indicated by the donor node by using the first information. The first information is carried in an RRC message or an F1AP message, or may be carried in a new message. This is not specifically limited in this application. Optionally, whether a specific node (for example, the first IAB node) is suitable to be used as a cluster header node may be determined based on one or more of the following conditions:
(a) a quantity of neighboring nodes of the first IAB node is greater than a first preset value;
(b) a quantity of parent nodes of the first IAB node is greater than a second preset value and a quantity of child nodes is greater than a third preset value;
(c) the cluster header node configures at least two entries for a same destination address (for example, a destination BAP address);
(d) the first IAB node allows receiving and sending via a same BAP entity;
(e) a distributed unit DU of the first IAB node establishes a connection to a parent node;
(f) a mobile terminal MT of the first IAB node establishes a connection to a child node;
(g) the first IAB node deactivates an MT function or activates only a DU function, or the first IAB node establishes a DU-DU interface with a neighboring node; or
(h) the first IAB node deactivates a DU function or activates only an MT function.

It may be understood that, the first preset value, the second preset value, and the third preset value in the foregoing condition may be pre-configured, or may be indicated by using signaling. This is not specifically limited in this application. In addition, whether the first IAB node is suitable to be used as the cluster header node may be implemented by the donor node, or may be implemented by the first IAB node.

Optionally, in the method 600, the first IAB node may perform step S620 after determining, based on the BAP routing ID, that a link between the first IAB node and a node (for example, the second IAB node) corresponding to a next-hop BAP address meets at least one of the following conditions:
(a) a radio link failure RLF occurs on a link between the first IAB node and the second IAB node, where the second IAB node is a next-hop node of the first IAB node corresponding to a first path field;
(b) a beam failure (beam failure recovery, BFR) occurs on the link between the first IAB node and the second IAB node; and
(c) quality of a channel between the first IAB node and the second IAB node is lower than a first threshold.

In other words, in this embodiment of this application, when the RLF or the BFR occurs on an original transmission link of the first IAB node, or the channel quality is lower than the preset value, a path or a next-hop node may be determined by the first IAB node based on quality of channels between the first IAB node and all candidate next-hop nodes, so that a rapid channel change is better adapted, a packet loss is reduced or node congestion is alleviated, and robustness of service transmission is improved.

It may be understood that, the first threshold in the foregoing condition may be pre-configured, or may be indicated by using signaling. This is not specifically limited in this application.

Optionally, in the method 600, if the cluster header node includes two network elements (an MT and a DU), channel quality may be obtained by a sending network element (for example, the DU), or may be obtained by a receiving network element (for example, the MT).

In a case in which the sending network element obtains the channel quality, the sending network element may measure the channel to obtain the channel quality measurement report. For example, a BAP entity of the sending network element obtains a channel quality measurement report from the PHY layer. Further, a transmit side of the BAP entity of the sending network element queries a routing table, determines a path based on the measurement report, rewrites the BAP PDU header, establishes the BAP PDU, and sends the BAP PDU.

In a case in which the receiving network element obtains the channel quality, the receiving network element may measure the channel to obtain the channel quality measurement report. For example, a BAP entity of the receiving network element receives a channel quality measurement report from the PHY layer, and transfers the channel quality measurement report to a transmit side of the BAP entity of the sending network element. The transmit side of the BAP entity of the sending network element queries a routing table, determines a path based on the channel quality measurement report, rewrites the BAP PDU header, establishes the BAP PDU, and sends the BAP PDU. For another example, a BAP entity of the receiving network element receives a channel quality measurement report from the PHY layer, queries a routing table, determines a path based on the channel quality measurement report, and indicates the BAP PDU header to a transmit side of the BAP entity of the sending network element, and the transmit side sends the BAP PDU based on the indication.

FIG. 8 is a schematic flowchart of a communication method according to an embodiment of this application. The schematic flowchart shown in FIG. 8 is applied to a donor node, and includes the following steps.

S810: Determine first information. The first information indicates a first IAB node to select a first entry from at least one entry.

For example, the first information may indicate that the first IAB node is a cluster header node, and the cluster header node is configured to select the first entry from the at least one entry.

It may be understood that, the cluster header node may be pre-configured or predefined, and a definition of the cluster header node is consistent with that in S640. Details are not described herein again.

S820: Send the first information to the first IAB node.

Optionally, the first information is carried in an RRC message or an F1AP message, or may be carried in a new message. This is not specifically limited in this application.

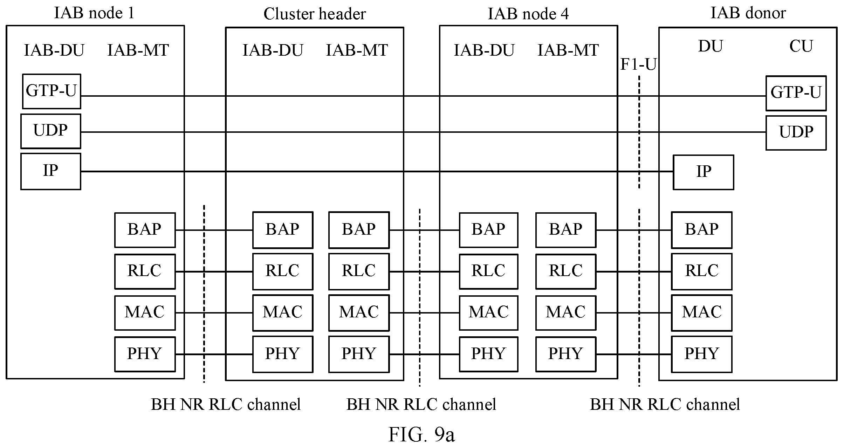

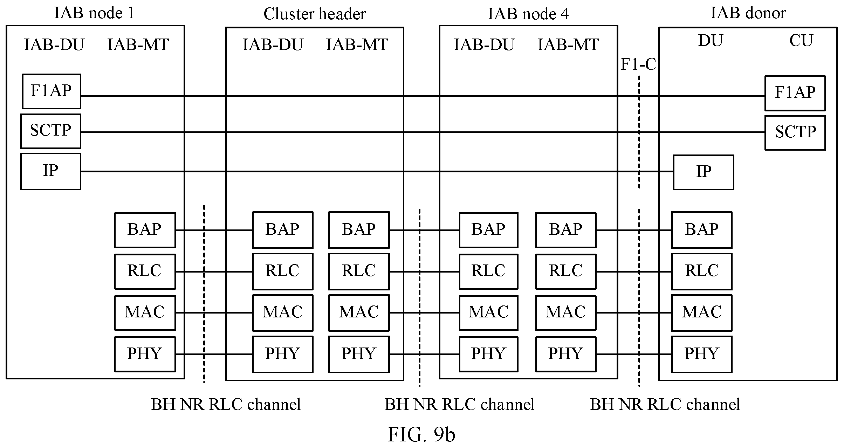

In this embodiment of this application, because the cluster header node is introduced, a corresponding protocol stack may be updated with reference to a function of the cluster header node. FIG. 9 is a diagram of user plane and control plane protocol stacks of an IAB network from a network perspective according to this application. FIG. 9(a) is a diagram of a user plane protocol stack, and FIG. 9(b) is a diagram of a control plane protocol stack. As shown in FIG. 9, like an IAB node, a cluster header node has two BAP entities, where an MT and a DU each include one BAP entity, and each of the two BAP entities has transmitting and receiving functions.

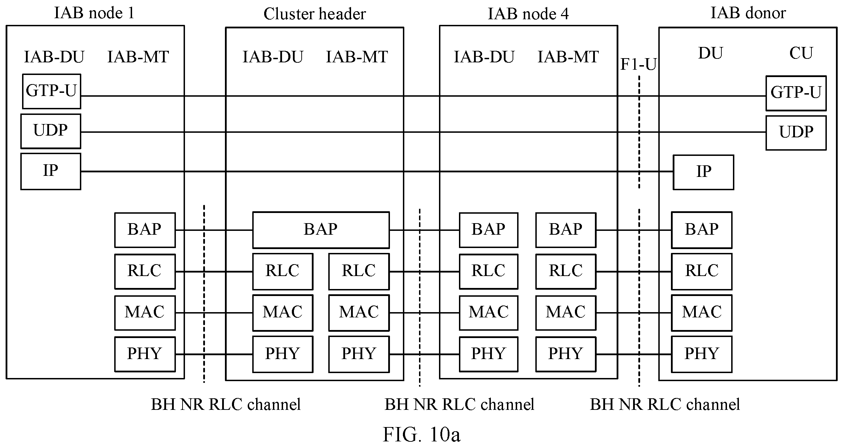

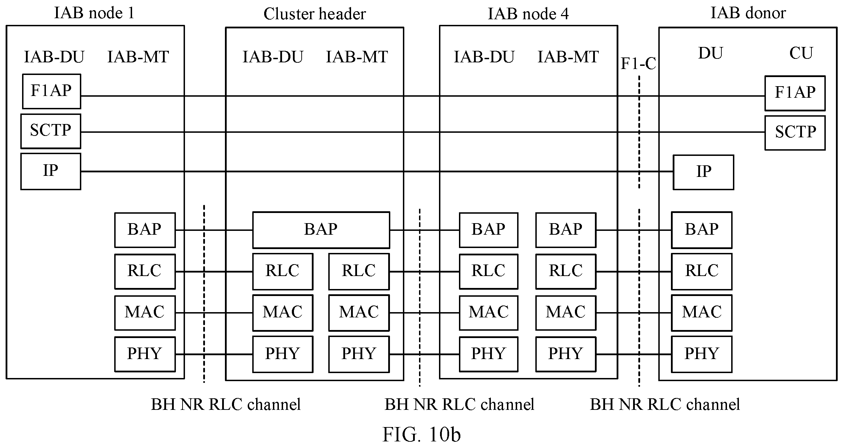

FIG. 10 is a diagram of user plane and control plane protocol stacks of an IAB network from a network perspective according to this application. FIG. 10(a) is a diagram of a user plane protocol stack, and FIG. 10(b) is a diagram of a control plane protocol stack. As shown in FIG. 10, a cluster header node has only one BAP entity, an MT and a DU share the BAP entity, and the BAP entity has transmitting and receiving functions.

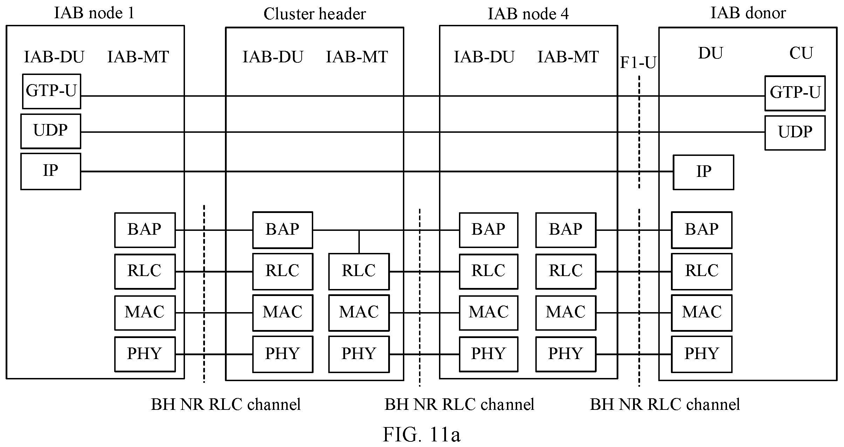

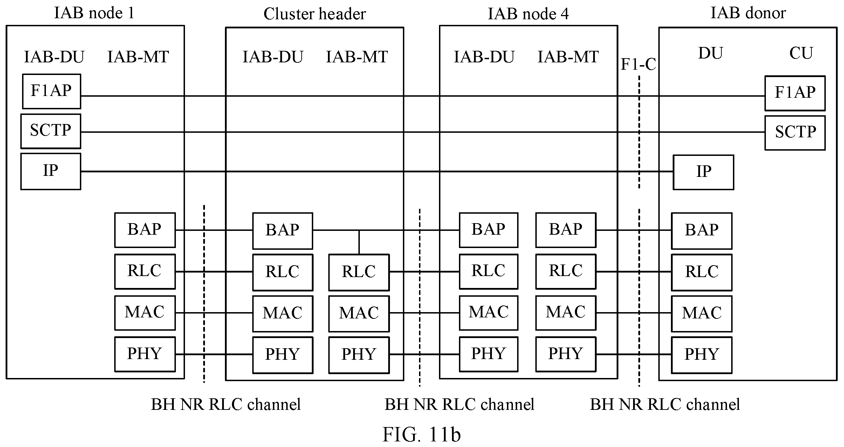

FIG. 11 is a diagram of user plane and control plane protocol stacks of an IAB network from a network perspective according to this application. FIG. 11(a) is a diagram of a user plane protocol stack, and FIG. 11(b) is a diagram of a control plane protocol stack. As shown in FIG. 11, a cluster header node has only one BAP entity, and exists only on a DU side, and the BAP entity has transmitting and receiving functions.

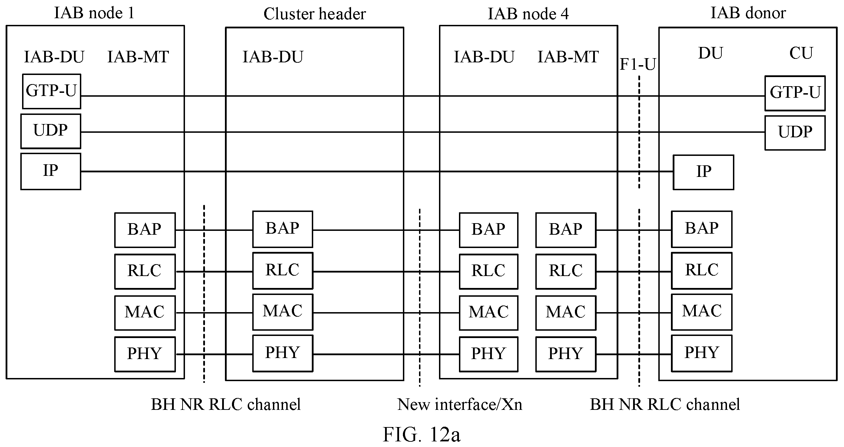

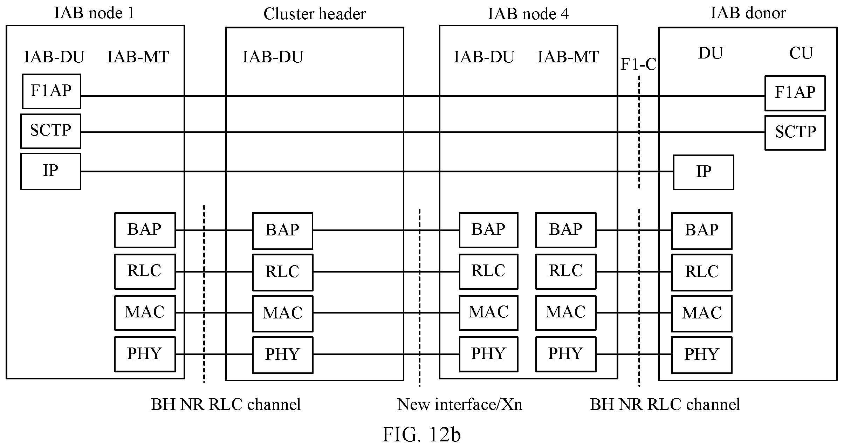

FIG. 12 is a diagram of user plane and control plane protocol stacks of an IAB network from a network perspective according to this application. FIG. 12(a) is a diagram of a user plane protocol stack, and FIG. 12(b) is a diagram of a control plane protocol stack. As shown in FIG. 12, a cluster header node activates only a DU function, that is, there is only one BAP entity. The BAP entity has transmitting and receiving functions. The cluster header node communicates with a DU of a neighboring node (for example, a parent node) through an Xn interface or a new interface.

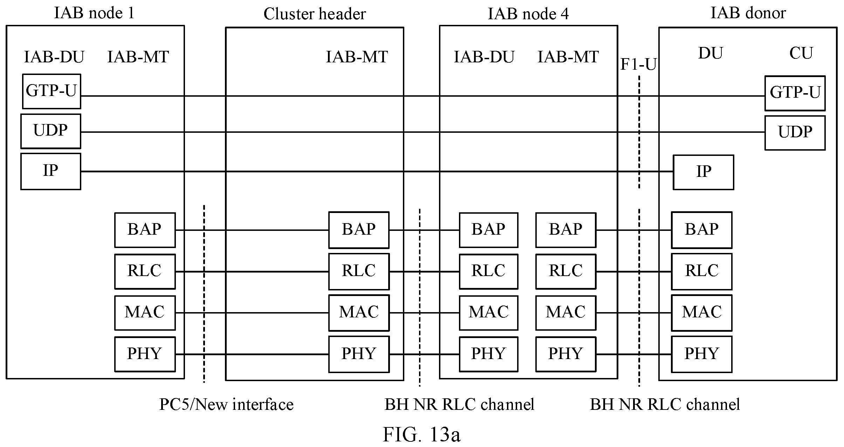

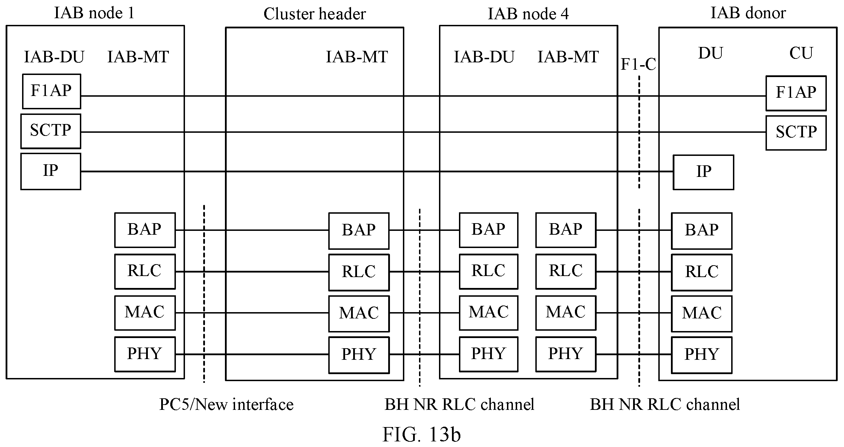

FIG. 13 is a diagram of user plane and control plane protocol stacks of an IAB network from a network perspective according to this application. FIG. 13(a) is a diagram of a user plane protocol stack, and FIG. 13(b) is a diagram of a control plane protocol stack. As shown in FIG. 13, a cluster header node activates only an MT function, that is, there is only one BAP entity. The BAP entity has transmitting and receiving functions. The cluster header node communicates with an MT of a neighboring node (a child node) through a PC5 interface or a new interface.

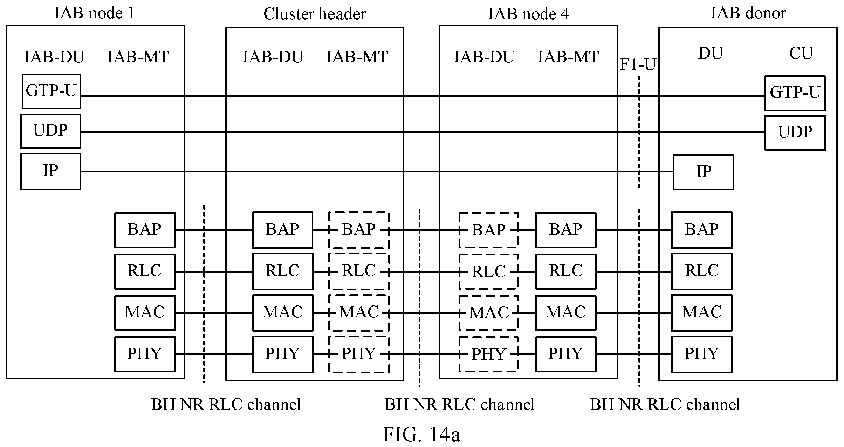

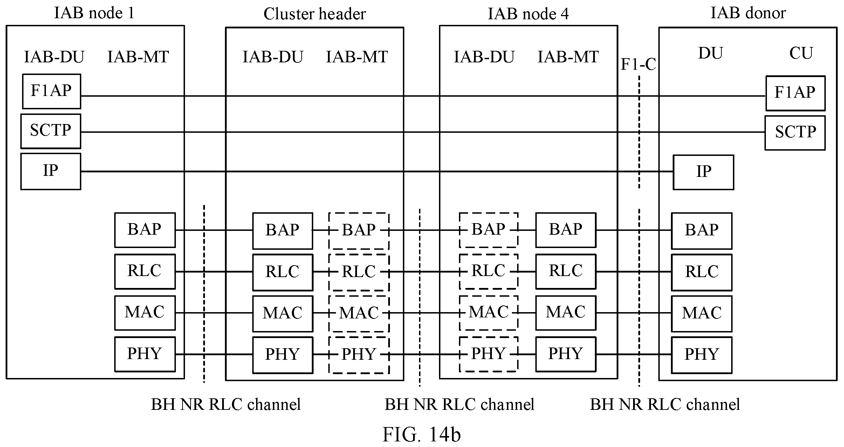

FIG. 14 is a diagram of user plane and control plane protocol stacks of an IAB network from a network perspective according to this application. FIG. 14(a) is a diagram of a user plane protocol stack, and FIG. 14(b) is a diagram of a control plane protocol stack. As shown in FIG. 14, a cluster header node may involve a path on which sending and receiving are performed on a same side. That is, a DU performs receiving and sending, or an MT performs receiving and sending. The DU of the cluster header node directly sends a packet on a same side after receiving the packet.

It may be understood that, the communication method provided in this embodiment of this application may be applied to any IAB system, for example, the IAB system shown in FIG. 1 or FIG. 2. For a protocol stack architecture of the IAB node, refer to any one of the protocol stack architectures in FIG. 3 to FIG. 5 and FIG. 9 to FIG. 14. The first IAB node in embodiments of this application may be, for example, the first IAB node in FIG. 1, FIG. 2, FIG. 5, FIG. 7, or FIG. 9 to FIG. 14; the second IAB node may be, for example, the second IAB node in FIG. 1, FIG. 2, FIG. 4, FIG. 5, or FIG. 7; the third IAB node may be, for example, the third IAB node in FIG. 1, FIG. 2, or FIG. 7; the fourth IAB node may be, for example, the fourth IAB node in FIG. 1, FIG. 2, FIG. 4, FIG. 5, FIG. 7, or FIG. 9 to FIG. 14; the donor node may be, for example, the donor node in FIG. 1, FIG. 2, FIG. 4, FIG. 5, FIG. 7, or FIG. 9 to FIG. 14; and the cluster header node is, for example, the cluster header node in FIG. 9 to FIG. 14. In addition, unless otherwise specified, the network device in embodiments of this application may be a donor node or a device that performs a function of a donor node. For example, the network device may be the donor node in FIG. 1, FIG. 2, FIG. 4, FIG. 5, or FIG. 7 to FIG. 14; or the network device may be a device in a core network, for example, a mobile gateway device, and specifically, for example, a UPF network element.

FIG. 15 is a diagram of a structure of a communication apparatus according to an embodiment of this application.

In a first possible embodiment, as shown in FIG. 15, the communication apparatus 1500 includes a transceiver module 1501 and a processing module 1502. Optionally, the communication apparatus 1500 further includes a storage module 1503. In this embodiment of this application, the communication apparatus 1500 may be configured to implement a function of the first IAB node/cluster header node, for example, a function of any first IAB node/cluster header node in FIG. 6, FIG. 7, and FIG. 9 to FIG. 14. Correspondingly, the communication apparatus 1500 may implement steps performed by the first IAB node/cluster header node.

For example, the communication apparatus 1500 may be configured to implement a function of the first IAB node in FIG. 6. The communication apparatus may be the first IAB node, or may be a component (for example, a chip or a circuit) that may be used for the first IAB node. For example, the transceiver module 1501 may be configured to implement processing such as receiving or sending, for example, perform S610 and S630. Optionally, the processing module 1502 may be configured to process signaling or data, for example, perform S640 and S620. The processing module 1502 may be further configured to perform step S620 after determining, by the first IAB node based on a BAP routing ID, that a link corresponding to a next-hop BAP address meets a condition.

Optionally, the storage module 1503 may be configured to store instructions, a program, and/or data, and the like. The transceiver module 1501 and the processing module 1502 may be coupled to the storage module. For example, the processing module 1502 reads corresponding instructions, program, and/or data from the storage module, to implement a function of the first IAB node in the foregoing method embodiment.

In a second possible embodiment, still as shown in FIG. 8, the communication apparatus 1500 includes a transceiver module 1501 and a processing module 1502. In this embodiment of this application, the communication apparatus 1500 may be configured to implement a function of the donor node, for example, a function of any donor node in FIG. 7 to FIG. 14. Correspondingly, the communication apparatus 1500 may implement steps performed by the donor node.

For example, the communication apparatus 1500 may be configured to implement a function of the donor node in FIG. 8. For example, the processing module 1502 may be configured to process signaling or data, for example, perform S810. The transceiver module 1501 may be configured to implement processing such as receiving or sending, for example, perform S820.

For example, the transceiver module 1501 may be implemented by using a transceiver circuit, for example, a transceiver, the processing module 1502 may be implemented by using at least one processor, and the storage module 1503 may be implemented by using at least one memory.

FIG. 16 is a diagram of a structure of a communication apparatus according to an embodiment of this application. As shown in FIG. 16, the communication apparatus 1600 includes a processor 1601 and a communication interface 1602. The processor 1601 and the communication interface 1602 are coupled to each other. It may be understood that, the communication interface 1602 may be a transceiver or an input/output interface. The processor 1601 and the communication interface 1602 may implement any foregoing communication method, for example, the communication method in FIG. 6 or FIG. 8. Correspondingly, the communication apparatus 1600 may also implement a function of the communication apparatus 1500. Optionally, the communication apparatus 1600 may further include a memory 1603, configured to: store instructions to be executed by the processor 1601, store input data required by the processor 1601 to run the instructions, or store data generated after the processor 1601 runs the instructions. Optionally, the memory 1603 and the processor 1601 may be coupled.

The processor 1601 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

In a first possible embodiment, the communication apparatus 1600 may be configured to implement a function of the foregoing first IAB node, and correspondingly may also implement steps performed by the first IAB node. In a second possible embodiment, the communication apparatus 1600 may be configured to implement a function of the foregoing donor node, and correspondingly may also implement steps performed by the donor node.

In another possible embodiment, the communication apparatus 1600 includes a processor 1601 and a memory 1603. The communication apparatus 1600 may be configured to implement a function of the foregoing first IAB node, and correspondingly may also implement steps performed by the first IAB node. In a second possible embodiment, the communication apparatus 1600 may be configured to implement a function of the foregoing donor node, and correspondingly may also implement steps performed by the donor node.

An embodiment of this application provides a communication system. The communication system includes any first IAB node and donor node described above. The first IAB node is, for example, the first IAB node in any one of FIG. 6 to FIG. 14, and the donor node is, for example, the donor node in FIG. 8 to FIG. 14. For functions of the first IAB node and the donor node, refer to the foregoing description.

An embodiment of this application provides a chip system. The chip system includes a processor and an interface. The processor is configured to invoke instructions from the interface and run the instructions; and when executing the instructions, the processor implements any foregoing communication method, for example, the communication method in FIG. 6 or FIG. 8.

An embodiment of this application provides a computer-readable storage medium. The computer-readable storage medium is configured to store a computer program or instructions; and when the computer program or the instructions are run, any communication method, for example, the communication method in FIG. 6 or FIG. 8, is implemented.

An embodiment of this application provides a computer program product including instructions; and when the computer program product is run on a computer, any communication method, for example, the communication method in FIG. 6 or FIG. 8, is implemented.

The method steps in embodiments of this application may be implemented by hardware, or may be implemented by the processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write the information into the storage medium. Certainly, the storage medium may be a component of the processor. The processor and the storage medium may be disposed in an ASIC. In addition, the ASIC may be located in a base station or a terminal. Certainly, the processor and the storage medium may alternatively exist in a base station or a terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, the procedure or functions according to embodiments of this application are all or partially generated. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include both a volatile storage medium and a non-volatile storage medium.

In embodiments of this application, unless otherwise specified or there is a logic conflict, terms and/or description in different embodiments are consistent and may be referenced by each other. Technical features in different embodiments may be combined to form a new embodiment based on an internal logical relationship.

It may be understood that, various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a first integrated access and backhaul IAB node, wherein the method comprises:
receiving a backhaul adaptation protocol BAP data protocol data unit PDU and backhaul BH routing configuration information, wherein a BAP data PDU header comprises a destination address field and a path field, the BH routing configuration information comprises at least one entry, each of the at least one entry comprises a respective BAP address, a respective next-hop BAP address, and a respective BAP path identifier, and the BAP address of each of the at least one entry matches the destination address field;
selecting a first entry from the at least one entry, and selecting a link corresponding to a next-hop BAP address in the first entry as an egress link; and
rewriting the BAP data PDU header, and sending the BAP data PDU to the egress link.

2. The method according to claim 1, wherein selecting the first entry from the at least one entry comprises:
determining the first entry based on quality of a channel between the first IAB node and a next-hop node corresponding to a next-hop BAP address in the at least one entry.

3. The method according to claim 2, wherein determining the first entry based on the quality of the channel between the first IAB node and the next-hop node corresponding to the next-hop BAP address in the at least one entry comprises:
determining an entry corresponding to a first next-hop BAP address as the first entry, wherein quality of a channel between the first IAB node and a next-hop node corresponding to the first next-hop BAP address meets a first preset condition;
determining an entry corresponding to a first next-hop BAP address as the first entry, wherein a value of a path selection function between the first IAB node and a next-hop node corresponding to the first next-hop BAP address meets a second preset condition, wherein the value of the path selection function is determined based on the path selection function and quality of a channel between the first IAB node and the next-hop node corresponding to the first next-hop BAP address, a path priority, or a cost metric; or
determining an entry corresponding to a first next-hop BAP address as the first entry, wherein a value of a path selection function between the first IAB node and a next-hop node corresponding to the first next-hop BAP address meets a third preset condition, wherein the value of the path selection function is determined based on the path selection function and quality of a channel between the first IAB node and the next-hop node corresponding to the first next-hop BAP address, a number of hops from the next-hop node corresponding to the first next-hop BAP address to a destination node, or a position of the next-hop node corresponding to the first next-hop BAP address.

4. The method according to claim 2 or 3, wherein the quality of the channel between the first IAB node and the next-hop node corresponding to the next-hop BAP address in the at least one entry is obtained through measurement at a physical layer of the first IAB node, and the quality of the channel between the first IAB node and the next-hop node corresponding to the next-hop BAP address in the at least one entry comprises one or more of the following parameters:
a signal-to-noise ratio SNR, a signal to interference plus noise ratio SINR, a channel quality indicator CQI, a received signal strength indicator RSSI, or a reference signal received power RSRP.

5. The method according to any one of claims 1 to 4, wherein rewriting the BAP data PDU header comprises rewriting the path field to a BAP path identifier in the first entry.

6. The method according to any one of claims 1 to 5, wherein selecting the first entry from the at least one entry comprises:
determining, by the first IAB node, that a radio link failure RLF occurs on a link between the first IAB node and a second IAB node, a beam failure BFR occurs on the link between the first IAB node and the second IAB node, and/or quality of a channel between the first IAB node and the second IAB node is lower than a first threshold; and
selecting the first entry from the at least one entry, wherein the second IAB node is a next-hop node of the first IAB node corresponding to the path field.

7. The method according to any one of claims 1 to 6, wherein the method further comprises:
obtaining first information, wherein the first information indicates that the first IAB node is a cluster header node.

8. The method according to claim 7, wherein the cluster header node meets one or more of the following conditions:
a quantity of neighboring nodes of the cluster header node is greater than a first preset value;
a quantity of parent nodes of the cluster header node is greater than a second preset value and a quantity of child nodes is greater than a third preset value;
the cluster header node configures at least two entries for the destination address field;
the cluster header node allows receiving and sending via a same BAP entity;
a distributed unit DU of the cluster header node establishes a connection to a parent node;
a mobile terminal MT of the cluster header node establishes a connection to a child node;
the cluster header node deactivates an MT function or activates only a DU function, or the cluster header node establishes a DU-DU interface with a neighboring node; or
the cluster header node deactivates a DU function or activates only an MT function.

9. The method according to claim 7, wherein the first information is carried in a radio resource control RRC message or an F1 application layer protocol AP message.

10. A communication method, applied to a donor node, wherein the method comprises:
determining first information, wherein the first information indicates a first IAB node to select a first entry from at least one entry; and
sending the first information to the first IAB node.

11. The method according to claim 10, wherein the first information is carried in a radio resource control RRC message or an F1 application layer protocol AP message.

12. A communication apparatus, wherein the apparatus comprises at least one processor, and the at least one processor is coupled to at least one memory; and
the at least one processor is configured to execute a computer program or instructions stored in the at least one memory, so that the apparatus is enabled to perform the method according to any one of claims 1 to 9.

13. A communication apparatus, wherein the apparatus comprises at least one processor, and the at least one processor is coupled to at least one memory; and
the at least one processor is configured to execute a computer program or instructions stored in the at least one memory, so that the apparatus is enabled to perform the method according to claim 10 or 11.

14. A readable storage medium, configured to store instructions, wherein when the instructions are executed, the method according to any one of claims 1 to 9 is implemented, or the method according to claim 10 or 11 is implemented.

15. A communication apparatus, comprising a processor and an interface circuit, wherein
the interface circuit is configured to: receive code instructions and transmit the code instructions to the processor; and
the processor is configured to run the code instructions to perform the method according to any one of claims 1 to 9.

16. A communication apparatus, comprising a processor and an interface circuit, wherein
the interface circuit is configured to: receive code instructions and transmit the code instructions to the processor; and
the processor is configured to run the code instructions to perform the method according to claim 10 or 11.

17. A communication system, wherein the communication system comprises the apparatus according to claim 12 and the apparatus according to claim 13, or comprises the apparatus according to claim 15 and the apparatus according to claim 16.
